# EUROPÄISCHE PATENTSCHRIFT

(11) **EP 3 769 901 B1**
(45) Veröffentlichungstag und Bekanntmachung des Hinweises auf die Patenterteilung: **16.03.2022**
(21) Anmeldenummer: 20187696.8
(22) Anmeldetag: 24.07.2020
(51) Int. Cl.: B23K 31/02, B21D 53/16, B23K 33/00, F16J 15/3252, F16J 15/328

(54) **VERFAHREN UND VORRICHTUNG ZUR HERSTELLUNG VON GESCHWEISSTEN RINGEN**
METHOD AND DEVICE FOR PRODUCING WELDED RINGS
PROCÉDÉ ET DISPOSITIF DE FABRICATION DE BAGUES SOUDÉES

(30) Priorität: 24.07.2019 DE 102019119987
(43) Veröffentlichungstag der Anmeldung: 27.01.2021
(73) Patentinhaber: Wilh. Kämper GmbH u. Co. KG, 58513 Lüdenscheid (DE)
(72) Erfinder: Müchler, Thomas Wilhelm, 58579 Schalksmühle (DE); Kreher, Jan, 58791 Werdohl (DE)
(74) Vertreter: Patentanwälte Dörner & Kötter PartG mbB

(56) Entgegenhaltungen:
- EP-A1- 0 302 954
- EP-A2- 2 556 905
- JP-A- H0 471 794
- JP-A- 2004 249 305
- US-A1- 2013 200 575

## Beschreibung

Die Erfindung betrifft Verfahren zur Herstellung von geschweißten Ringen mit den Merkmalen des Oberbegriffs des Patentanspruchs 1. Die Erfindung betrifft des Weiteren eine Vorrichtung zur Herstellung von geschweißten Ringen. Verfahren und Vorrichtungen zur Herstellung von geschweißten Ringen o. dgl. sind an sich bekannt. So ist aus der EP 2 556 905 A2 (Basis des Oberbegriffes des Anspruchs 2) ein Verfahren zur Herstellung von ringförmigen Kupplungslamellen bekannt, bei dem das Schweißen bspw. mittels Laserschweißen erfolgen kann. Nach dem Schweißen der Trennstellen wird die Schweißnaht mit einem Glättungswerkzeug bearbeitet. Aus der JP 04071794 A ist ein Verfahren zur Durchführung einer starken Stumpfschweißung, bei dem die Endflächen und damit die Trennstellen eines Stahlblechs unter Druck gesetzt werden und durch eine Walze geglättet werden. Sie werden mittels einer Klemmvorrichtung geklemmt gehalten und durch einen Laserstrahl verschweißt. Schließlich ist aus der JP 2004 249305 A ein Laserschweißverfahren bekannt, bei dem vor dem Stumpfschweißen eines Paares von zu verschweißenden Elementen die Endflächen geschliffen und anschließend stumpf-verschweißt.

Geschweißte Ringe der hier betrachteten Art sind Stütz- und Klemmringe aus Bandstahl, die in unterschiedlichsten Geometrien angeboten werden. Üblicherweise haben solche Stütz- und Klemmringe eine Dicke von ca. 2 bis 3 mm und eine Breite von ca. 8 bis 20 mm. Die Materialfestigkeiten solcher Ringe bewegen sich insgesamt in einem Bereich zwischen ca. 250 N/mm² bis ca. 800 N/mm². Die Ringe, die Gegenstand der vorliegenden Erfindung sind, haben eine relativ niedrige Festigkeit zwischen ca. 250 N/mm² bis ca. 400 N/mm². Die US 2013/0200575 A1 (Startpunkt für den Anspruch 1) offenbart bspw. einen Tragring aus einem kaltgewalzten Blech mit hoher Streckgrenze von 210 N/mm² und mit einer Zuggrenze von 350 N/mm². Diese werden üblicherweise durch Rollbiegen hergestellt. Die Enden werden mittels Stumpfschweißen gefügt. Ringe höherer Festigkeit werden überwiegend lasergeschweißt.

Zwar erfüllen auch die durch Stumpfschweißen gefügten Ringe niedrigerer Festigkeit die an sie gestellten Anforderungen; der Markt verlangt jedoch seit neuestem zunehmend lasergeschweißte Ringe, unabhängig von der jeweiligen Materialfestigkeit des Rings.

Anders als bei Ringen hoher Festigkeit treten bei Ringen niedrigerer Festigkeit beim Trennvorgang unsaubere Kanten auf. Bei Ringen höherer Festigkeit bestehen diese Schwierigkeiten nicht, weil das Material höherer Festigkeit beim Trennschnitt sauber bricht, so dass die Schnittflächen, an welchen der Ring verschweißt wird, eine ausreichende Qualität haben, um lasergeschweißt werden zu können. Bei Ringen mit relativ niedriger Festigkeit ist dies nicht der Fall. Die Schnittkantenbeschaffenheit ist hier für ein Laserschweißen nicht ausreichend. Beim Trennschnitt mit Hilfe eines Messers und eines Gegenmessers treten vielmehr unsaubere Schnittkanten auf, deren Qualität ein Laserschweißen nicht zulässt. Gleichzeitig dürfen die Schnittkanten auch nicht zu glatte Oberflächen aufweisen, weil dann der für das Laserschweißen erforderliche Schnittgrad nicht vorhanden ist und somit das vom Markt geforderte Laserschweißen nicht eingesetzt werden kann, um einen zuverlässig geschweißten Ring zu schaffen.

Hier will die Erfindung Abhilfe schaffen. Der Erfindung liegt die Aufgabe zu Grunde, ein Verfahren zur Herstellung von geschweißten Ringen zu schaffen, welches ein Laserschweißen auch bei relativ geringen Materialfestigkeiten zwischen ca. 250 N/mm² bis ca. 400 N/mm² zulässt. Gemäß der Erfindung wird diese Aufgabe durch die Merkmale des Patentanspruchs 1 gelöst.

Mit der Erfindung ist ein Verfahren zur Herstellung von geschweißten Ringen geschaffen, welches auch bei geringen Materialfestigkeiten ein Laserschweißen zulässt. Zwar hat das Laserschweißen technisch im Verhältnis zu dem bisher verwendeten Stumpfschweißen keinerlei Vorteile; der Markt verlangt jedoch seit neuestem nach lasergeschweißten Ringen auch im Bereich geringerer Materialfestigkeiten. Nach der spanenden Bearbeitung ist die Schnittkantenbeschaffenheit für ein Laserschweißen ausreichend. Die durch den Trennschnitt mit Hilfe des Messers und des Gegenmessers auftretenden unsauberen Schnittkanten sind dadurch derart geglättet, dass ein Laserschweißen zuverlässig möglich ist. Somit ist das erfindungsgemäße Verfahren geeignet, auch den modernen Trends in der Industrie Rechnung zu tragen und Ringe zu produzieren, die trotz ihrer Materialfestigkeiten lasergeschweißt sein können.

Die spanende Bearbeitung erfolgt dabei durch Stoßen, Räumen oder Schaben. Jedes der genannten spanenden, nicht spanabhebenden Bearbeitungsverfahren ist geeignet, die erforderliche Qualität der Schnittkanten bereitzustellen. Die Auswahl des jeweiligen spanenden Verfahrens hängt allein von den Vorstellungen des Produzenten, respektive des Kunden ab.

Das Biegen erfolgt mittels Rollbiegen. Beim Rollbiegeverfahren handelt es sich um ein sehr einfaches und damit preiswertes und gleichzeitig bewährtes Verfahren. Dabei wird in einem Biegevorgang das Biegegut durch eine Biegeeinrichtung hindurch vorgeschoben, so dass das Biegegut beim Passieren der Biegeeinrichtung eine Krümmung erfährt und zu dem Ringbiegeteil gebogen wird. Nach Erreichen der Ringform wird der Ring vom nachfolgenden Band abgetrennt.

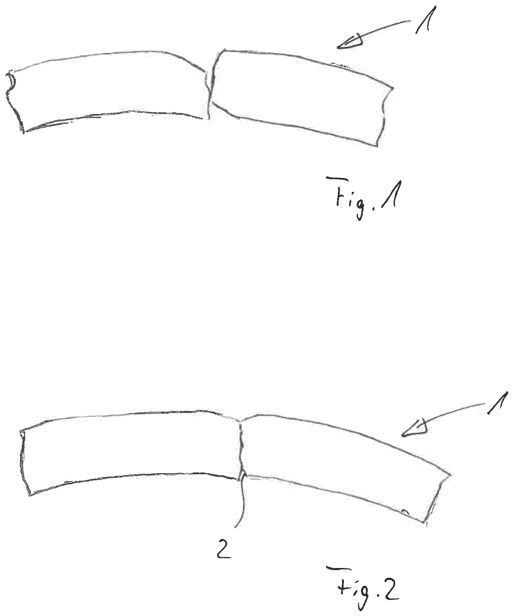

Da aufgrund der relativ geringen Materialfestigkeit die Trennstelle keine ausreichende Qualität aufweist, wird erfindungsgemäß vor dem Verschweißen die Trennstelle 2 bzw. die zu verschweißenden Bandenden spanend bearbeitet. Dies kann durch Stoßen, Räumen, Meißeln oder Schaben oder auch beidseitiges Beschneiden (sog. "beidseitiger Schnitt" oder "double cutting edge") erfolgen. Alle genannten Verfahren sind geeignet, eine ausreichende Qualität der Trennstelle hervorzurufen. Diese glätten zwar die Bandenden; sie hinterlassen jedoch gleichzeitig ein ausreichendes Maß an Schnittgrad, um das Laserschweißen zu ermöglichen. Erkennbar ist dies anhand der Figuren 1 und 2. Während bei einem einfachen Trennschnitt ohne spanende Bearbeitung nach dem Rollbiegen keine ausreichende Materialmenge vorhanden ist und der Spalt zwischen den zu verschweißenden Bandenden groß ist (vgl. Figur 1), ist nach der spanenden Bearbeitung ausreichend Material vorhanden (vgl. Figur 2). Ebenso liegen die Bandenden aneinander, wodurch sie für ein Laserschweißen geeignet sind.

Bei der erfindungsgemäßen Vorrichtung zur Herstellung von geschweißten Ringen wird Bandstahl kontinuierlich der Vorrichtung zugefügt. Erste Station in der Vorrichtung ist die Rollbiegeeinrichtung, in der das Band zu einem Ring biegbar ist. Unmittelbar im Bereich der Rollbiegeeinrichtung befindet sich die Trenneinrichtung, die aus Messer und Gegenmesser besteht. Diese trennt den fertig gestellten, noch nicht geschweißten Ring 1 vom Bandstahl ab. Der Ring wird im Anschluss mittels Transfer zu einer Bearbeitungsstation transportiert, in der die spanende Bearbeitung erfolgt. Die spanende Bearbeitung erfolgt mittels Stoßen, Räumen, oder Schaben. Spanende Bearbeitung im Sinne der vorliegenden Erfindung bedeutet nicht die Bearbeitung mittels spanabhebender Verfahren wie Drehen, Fräsen, Bohren, Reiben, Sägen oder Feilen.

Hinter der Bearbeitungsstation für die spanende Bearbeitung ist die Schweißstation angeordnet, zu der Ring mittels Transfer weitergeleitet wird. Bei der Schweißstation handelt es sich erfindungsgemäß um eine Laserschweißstation. Dort wird der Ring 1 im Bereich der Trennstelle 2 lasergeschweißt, wodurch eine hohe Qualität der Schweißverbindungen und zugleich eine optisch ansprechende Gestaltung hervorgerufen ist. Nach dem Laserschweißen ist der Ring fertig gestellt und kann der Vorrichtung entnommen werden.

## Patentansprüche

1. Verfahren zur Herstellung von geschweißten Ringen aus einem Bandstahl, ches eine Materialfestigkeit zwischen 250 N/mm² und 400 N/mm² und einen Querschnitt von 2 bis 3 mm Dicke und 8 bis 20 mm Breite aufweist, bei dem das Band mit dem Ringdurchmesser entsprechender Länge mittels Rollbiegen zu einem Ring gebogen und an seinen Enden mittels Laserschweißen verschweißt wird, wobei die miteinander zu verschweißenden Bandenden vor dem Schweißen spanend durch Stoßen, Räumen, Schaben oder durch beidseitiges Beschneiden bearbeitet werden, wobei eine spanende Bearbeitung nicht die Bearbeitung mittels spanabhebender Verfahren wie Drehen, Fräsen, Bohren, Reiben, Sägen oder Feilen bedeutet.

2. Vorrichtung zur Herstellung von geschweißten Ringen aus einem Bandstahl, welches eine Materialfestigkeit zwischen 250 N/mm² und 400 N/mm² und einen Querschnitt von 2 bis 3 mm Dicke und 8 bis 20 mm Breite aufweist, die eine Biegeeinrichtung in Form einer Rollbiegeeinrichtung umfasst, in deren Bereich sich eine Trenneinrichtung befindet, und eine Schweißstation vorgesehen ist, die eine Laserschweißstation ist, **dadurch gekennzeichnet, dass** die Trenneinrichtung von einem Messer und einem Gegenmesser gebildet ist und zwischen der Trenneinrichtung und der Schweißstation eine Bearbeitungsstation für eine spanende Bearbeitung durch Stoßen, Räumen, Schaben oder durch beidseitiges Beschneiden befindet, wobei eine spanende Bearbeitung nicht die Bearbeitung mittels spanabhebender Verfahren wie Drehen, Fräsen, Bohren, Reiben, Sägen oder Feilen bedeutet.

## Claims

1. Method for producing welded rings from a strip steel, which has a material strength of between 250 N/mm² and 400 N/mm² and a cross-section of 2 to 3 mm thickness and 8 to 20 mm width, in which the strip with a length corresponding to the ring diameter is bent to a ring by means of roll bending and is welded at its ends by laser welding, wherein the strip ends to be welded together are machined before welding by slotting, broaching, scraping or by trimming on both sides, wherein machining does not mean machining by means of chip-removing processes such as turning, milling, drilling, reaming, sawing or filing.

2. Device for producing welded rings from a strip steel, which has a material strength of between 250 N/mm² and 400 N/mm² and a cross-section of 2 to 3 mm thickness and 8 to 20 mm width, which comprises a bending device in the form of a roll bending device, in the region of which a separating device is located, and a welding station is provided, which is a laser welding station, **characterised in that** the separating device is formed by a knife and a counter-knife, and a machining station for machining by slotting, broaching, scraping or by trimming on both sides is located between the separating device and the welding station, wherein machining does not mean machining by means of chip-removing processes such as turning, milling, drilling, reaming, sawing or filing.

## Revendications

1. Procédé de fabrication de bagues soudées en acier feuillard qui présente une solidité de matériau entre 250 N/mm² et 400 N/mm² ainsi qu'une section transversale de 2 à 3 mm d'épaisseur et de 8 à 20 mm de largeur, dans lequel le feuillard est cintré au diamètre de bague de longueur correspondante par roulage pour former une bague et soudé au laser à ses extrémités, sachant que les deux extrémités du feuillard à souder l'une avec l'autre sont usinées par enlèvement de copeaux par mortaisage, par brochage, par grattage ou par coupe des deux côtés avant le soudage, sachant qu'un usinage par enlèvement de copeaux ne signifie pas l'usinage au moyen de procédés par enlèvement de copeaux comme le tournage, le fraisage, le perçage, l'alésage, le sciage ou le limage.

2. Dispositif de fabrication de bagues soudées en acier feuillard qui présente une solidité de matériau entre 250 N/mm² et 400 N/mm² et une section transversale de 2 à 3 mm d'épaisseur et de 8 à 20 mm de largeur, qui comprend un équipement de cintrage sous la forme d'un équipement de roulage dans la zone duquel il y a un équipement de coupe et où un poste de soudage, qui est un poste de soudage laser, est prévu, **caractérisé en ce que** l'équipement de coupe est composé d'une lame et d'une contrelame et qu'une station d'usinage pour usinage par enlèvement de copeaux par mortaisage, par brochage, par grattage ou par coupe des deux côtés se trouve entre l'équipement de coupe et le poste de soudage, sachant qu'un usinage par enlèvement de copeaux ne signifie pas l'usinage au moyen de procédés par enlèvement de copeaux comme le tournage, le fraisage, le perçage, l'alésage, le sciage ou le limage.
